# EUROPEAN PATENT APPLICATION

(11) **EP 2 787 431 A1**
(43) Date of publication of application: **08.10.2014**
(21) Application number: 13275144.7
(22) Date of filing: 24.06.2013
(51) Int. Cl.: G06F 3/147

(54) **Electronic tag, electronic shelf labeling system, method of controlling electronic tag, and method of controlling electronic shelf labeling system**

(30) Priority: 01.04.2013 KR 20130035062
(71) Applicant: Samsung Electro-Mechanics Co., Ltd, Suwon, Gyunggi-Do (KR)
(72) Inventor: Byun, Gi Young, Gyunggi-do (KR); Woo, Seok Min, Gyunggi-do (KR); Song, Tae Heon, Gyunggi-do (KR); Woo, Sa Im, Gyunggi-do (KR); Kim, Hyun Hak, Gyunggi-do (KR); Lee, Yun Jong, Gyunggi-do (KR)
(74) Representative: Potter Clarkson LLP

(57) **Abstract**

There are provided an electronic tag, an electronic shelf labeling system, a method of controlling an electronic tag, and a method of controlling an electronic shelf labeling system. The electronic tag includes an operating mode setting unit setting an operating mode having at least two different temperature ranges, a control unit determining driving power information corresponding to the operating mode and controlling driving power depending on the determined driving power information, and a display unit displaying at least one of the driving power information and product information.

## Description

### CROSS-REFERENCE TO RELATED APPLICATIONS

This application claims the priority of Korean Patent Application No. 10-2013-0035062 filed on April 1, 2013, in the Korean Intellectual Property Office, the disclosure of which is incorporated herein by reference.

### BACKGROUND OF THE INVENTION

### Field of the Invention

The present invention relates to an electronic tag, an electronic shelf labeling system, a method of controlling an electronic tag, and a method of controlling an electronic shelf labeling system.

### Description of the Related Art

In recent times, research into and development of an electronic shelf label (ESL) system have been actively conducted.

Meanwhile, among components of the electronic shelf labeling system, an electronic tag using an electrophoretic display (EPD) has characteristics very suitable for realizing high reflectivity and contrast ratios, and low levels of power consumption.

On the other hand, the temperature range in which an electrophoretic display is usable is narrower than that of other display devices due to characteristics of materials of which electrophoretic displays are formed, such that there is a need to prevent image quality from deteriorating due to temperature changes.

In order to improve on the above-mentioned problems, the electrophoretic display uses a temperature sensor to detect the temperature of the surrounding environment and keeps image quality relatively optimized, depending on the detected temperature.

That is, an electronic tag using an electrophoretic display needs to include a temperature sensor and determine an apparatus and a communication method capable of transferring the detected temperature to a control unit or a display unit. In addition, the electronic tag needs to perform a logical operation that refers to the feedbacked temperature value to determine an optimal operating mode. Further, the electronic tag requires driving power to perform the above-mentioned operation.

However, when the electronic shelf labeling system is applied to a retail store, the electronic shelf labeling system is used under the following environments.

1) The use environment is a retail space in which consumer shopping is undertaken and a predetermined temperature range is maintained.

2) Special products, such as refrigerated foods, are also kept at a low temperature within a predetermined temperature range.

Therefore, among the components of an electronic shelf labeling system, an electronic tag using an electrophoretic display is mainly operated under the use environment conditions as described above. That is, despite that the temperature range for an electronic tag using an electrophoretic display may be previously known, there is a problem in that the temperature value is continuously detected using the temperature sensor.

The following Related Art Document discloses an electronic shelf label and a method of controlling the same. The following Related Art Document provides a method of reducing battery consumption by changing a delay value between horizontal scanning lines of an image display depending on a temperature of a surrounding environment. That is, the following Related Art Document does not disclose setting an operating mode using a switch or being provided with the operating mode through communication, without the temperature sensor.

### [Related Art Document]

Korean Patent Laid-Open Publication No. 10-2012-0077948

### SUMMARY OF THE INVENTION

An aspect of the present invention provides an electronic tag being provided with an operating mode depending on a switching operation or external communications and controlling driving power depending on the operating mode, without an existing temperature sensor. Another aspect of the present invention provides an electronic shelf labeling system using the proposed electronic tag, a method of controlling an electronic tag, and a method of controlling an electronic shelf labeling system.

According to an aspect of the present invention, there is provided an electronic tag, including: an operating mode setting unit setting an operating mode having at least two different temperature ranges; a control unit determining driving power information corresponding to the operating mode and controlling driving power depending on the determined driving power information; and a display unit displaying at least one of the driving power information and product information.

The operating mode setting unit may include a switching unit performing a switching operation to set the operating mode.

The operating mode setting unit may further include a communications unit that receives the operating mode externally supplied.

The control unit may include a register in which the driving power information corresponding to the operating mode is stored.

The display unit may include a register in which the driving power information corresponding to the operating mode is stored.

The electronic tag may further include: a power supply unit supplying the driving power to the display unit depending on the control of the control unit.

According to an aspect of the present invention, there is provided an electronic shelf labeling system, including: a server being provided with an operating mode having at least two different temperature ranges externally supplied; and a plurality of electronic tags being provided with the operating mode from the server to control driving power depending on driving power information corresponding to the operating mode so as to display at least one of the driving power information and product information.

The electronic shelf labeling system may further include: a plurality of gateways being provided with the operating mode from the server and providing the received operating mode to the plurality of electronic tags.

The electronic shelf labeling system may further include: a user terminal providing the operating mode to the server.

The plurality of electronic tags may include a communications unit being provided with the operating mode.

The plurality of electronic tags may further include a switching unit performing a switching operation to set the operating mode.

The plurality of electronic tags may further include a display unit displaying at least one of the driving power information and the product information.

The plurality of electronic tags may further include a control unit controlling the driving power depending on the driving power information.

The plurality of electronic tags may further include a power supply unit providing the driving power depending on the control of the control unit.

The plurality of electronic tags may further include a register in which the driving power information is stored.

According to an aspect of the present invention, there is provided a method of controlling an electronic tag, including: setting an operating mode having at least two different temperature ranges; determining driving power information corresponding to the operating mode; controlling driving power depending on the driving power information; and displaying at least one of the driving power information and product information.

The setting of the operating mode may include performing a switching operation to set the operating mode.

The setting of the operating mode may include being provided with the operating mode externally supplied.

According to an aspect of the present invention, there is provided a method of controlling an electronic shelf labeling system, including: allowing an operating mode having at least two different temperature ranges externally supplied to be provided to a server, to then provide the received operating mode to a plurality of gateways; providing, by the plurality of gateways, the operating mode to the plurality of electronic tags; controlling, by the plurality of electronic tags, to control driving power depending on driving power information corresponding to the operating mode; and displaying, using the plurality of electronic tags, at least one of the driving power information and product information.

The method of controlling an electronic shelf labeling system may further include: providing, by a user terminal, the operating mode to the server.

The method of controlling an electronic shelf labeling system may further include: directly providing, by the server, the operating mode to the plurality of electronic tags.

The method of controlling an electronic shelf labeling system may further include: performing, by the plurality of electronic tags, a switching operation to set the operating mode.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a block diagram of an electronic tag according to an embodiment of the present invention;
FIG. 2 is a block diagram of an operating mode setting unit according to an embodiment of the present invention;
FIG. 3 is a block diagram of the electronic tag in which a switching unit and a communications unit are included in the operating mode setting unit;
FIG. 4 is a block diagram of the electronic tag in which a register is included in the control unit of FIG. 1;
FIG. 5 is a block diagram of the electronic tag in which the register is included in the display unit of FIG. 1;
FIG. 6A is a graph illustrating a change in driving power depending on temperature;
FIG. 6B is a diagram illustrating a manner in which a temperature range is divided into two in a graph;
FIG. 6C is a diagram illustrating a manner in which a temperature range is divided into three in the graph of FIG. 6A;
FIG. 7 is a diagram illustrating the electronic tag displaying product information and an operating mode according to the embodiment of the present invention;
FIG. 8 is a block diagram of an electronic shelf labeling system according to an embodiment of the present invention;
FIG. 9 is a block diagram of an electronic shelf labeling system according to another embodiment of the present invention;
FIG. 10 is a flow chart of a method of controlling an electronic tag according to the embodiment of the present invention;
FIG. 11 is a flow chart of a method of controlling an electronic tag according to another embodiment of the present invention;
FIG. 12 is a flow chart of a method of controlling an electronic shelf labeling system according to an embodiment of the present invention; and
FIG. 13 is a flow chart of a method of controlling an electronic shelf labeling system according to another embodiment of the present invention.

### DETAILED DESCRIPTION OF THE EMBODIMENTS

Hereinafter, embodiments of the present invention will be described in detail with reference to the accompanying drawings. The invention may, however, be embodied in many different forms and should not be construed as being limited to the embodiments set forth herein.

Rather, these embodiments are provided so that this disclosure will be thorough and complete, and will fully convey the scope of the invention to those skilled in the art.

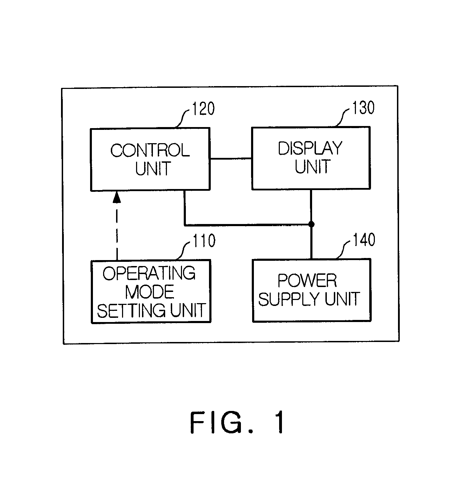

FIG. 1 is a block diagram of an electronic tag 100 according to an embodiment of the present invention.

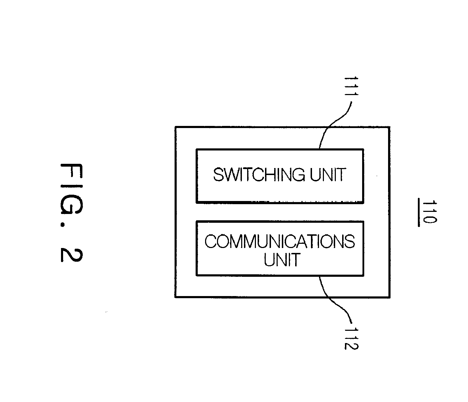

FIG. 2 is a block diagram of an operating mode setting unit 110 according to an embodiment of the present invention.

Referring to FIGS. 1 and 2, the electronic tag 100 may include an operating mode setting unit 110, a control unit 120, a display unit 130, and a power supply unit 140.

The operating mode setting unit 110 may set an operating mode and provide the set operating mode to the control unit 120. In this case, the operating mode may have at least two different temperature ranges.

In addition, the operating mode setting unit 110 is one embodiment for setting an operating mode and may include a switching unit 111 and a communications unit 112.

A fact that the operating mode setting unit 110 sets the operating mode by a switching operation will be first described.

The operating mode setting unit 110 may include the switching unit 111 and may set the operating mode through the switching operation in the switching unit 111. In this configuration, the switching unit 111 may include at least one switch, and as one embodiment of the present invention, the switch may simply be two selective switches and may also be three selective switches.

That is, as long as the switch included in the switching unit 111 performs a switching operation, any type of switch may be used without being limited in terms of the usage or form thereof. The reason is that the operating mode of the electronic tag 100 may be set depending on the use environment in which the electronic tag 100 is used, and thus the type of required switch may be changed.

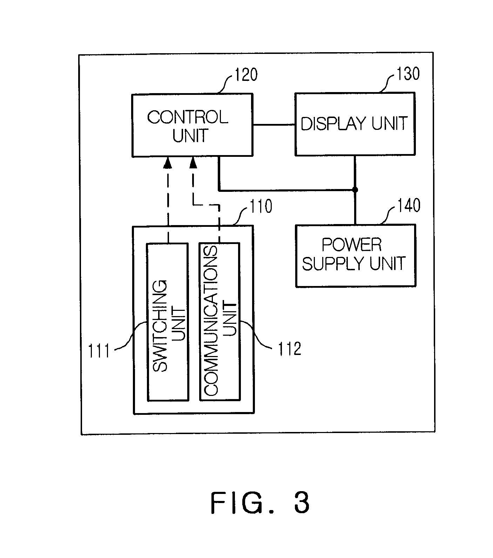

FIG. 3 is a block diagram of the electronic tag in which the switching unit 111 and the communications unit 112 are included in the operating mode setting unit 110.

Referring to FIG. 3, the operating mode setting unit 110 may receive the operating mode externally supplied. That is, the operating mode setting unit 110 may further include the communications unit 112 that receives the operating mode through external communications.

Therefore, the communications unit 112 may receive the operating mode externally supplied and may provide the operating mode to the control unit 120. As described above, the control unit 120 may determine driving power information corresponding to the operating mode to control the driving power depending on the driving power information.

The control unit 120 may determine the driving power information corresponding to the operating mode. Further, the driving power may be controlled depending on the determined driving power information. In more detail, the control unit 120 may receive the operating mode set by the switching operation of the switching unit 111 or may receive the operating mode that has been provided to the communications unit 112 through the external communications.

In this case, the control unit 120 may control the driving power depending on the driving power information corresponding to the operating mode.

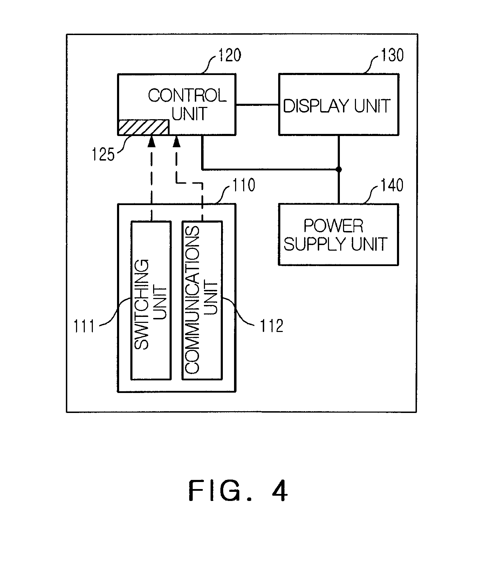

FIG. 4 is a block diagram of the electronic tag 100 in which a register 125 is included in the control unit 120 of FIG. 1. Referring to FIG. 4, the driving power information may be stored in the register 125 and the register 125 may be included in the control unit 120.

Herein, the driving power information indicates the information on the driving power that is to be controlled depending on the operating mode.

That is, in the operating mode setting unit 110, when the operating mode is set by the switching operation of the switching unit 111 or the communications unit 112 receives the operating mode externally supplied, the control unit 120 may control the driving power supplied to the display unit 130 depending on the driving power information pre-stored in the register and corresponding to the operating mode.

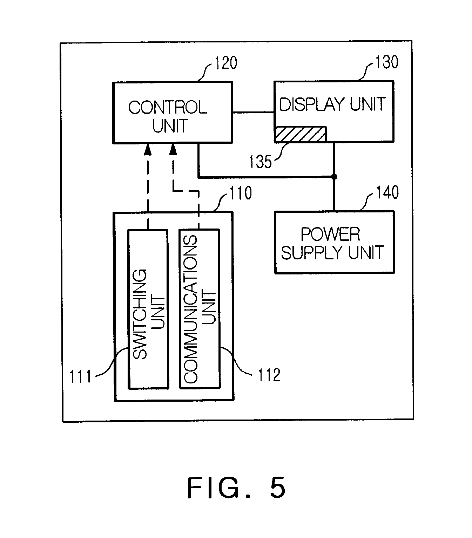

FIG. 5 is a block diagram of the electronic tag 100 in which a register 135 is included in the display unit 130 of FIG. 1. Referring to FIG. 5, the register 135 in which the driving power information is stored may be included in the display unit 130. Therefore, the control unit 120 receives the driving power information corresponding to the operating mode from the display unit 130, and thus may control the driving power.

The display unit 130 may output at least one of the driving power information and product information. At this time, the control unit 120 may control the driving power to keep the image quality of the display unit 130 stable.

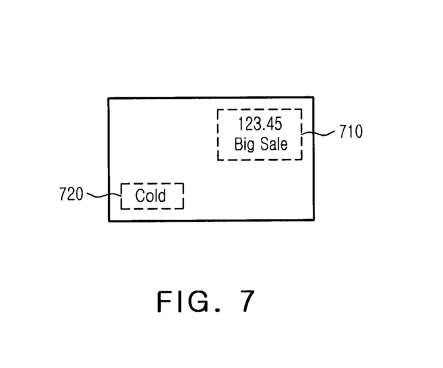

Further, for user convenience, the display unit 130 may output the operating mode set by the operating mode setting unit 110 on a screen. This will be described below with reference to FIG. 7.

The power supply unit 140 may supply the driving power to the display unit 130 depending on the control of the control unit 120. The control unit 120 may control the driving power depending on the driving power information corresponding to the operating mode.

The operating mode setting will be described for example.

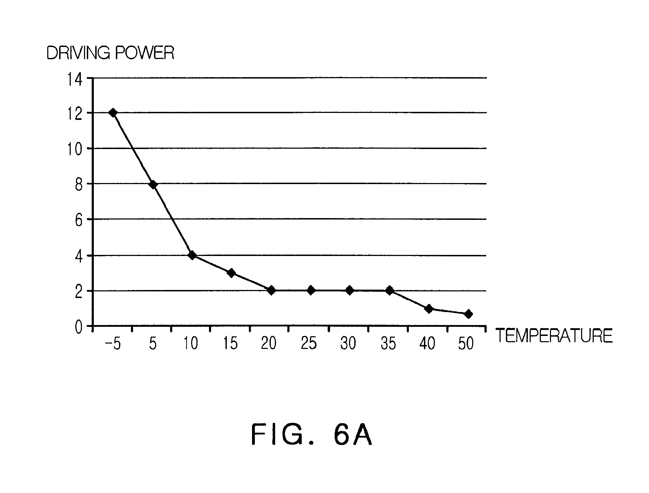

FIG. 6A is a graph illustrating a change in driving power depending on temperature. Referring to FIG. 6A,in a case in which materials of electrophoretic displays configuring the screens of the electronic tags 100 are the same, detailed deviations may be displayed on the screens of the electronic tags 100, but substantially, a tendency as illustrated in a graph of FIG. 6A is provided.

This indicates that the display unit 130 needs to supply the driving power corresponding to the temperature so as to keep the same image quality despite the difference in temperature.

However, as described above, when the electronic shelf labeling system is applied in a retail store, the electronic shelf labeling system may be operated under the following environmental conditions.

1) The use environment is a retail space in which consumer shopping is undertaken and a predetermined temperature range is maintained. 2) Special products, such as refrigerated foods, are also kept at a low temperature within a predetermined temperature range.

That is, since the environment in which the electronic shelf labeling system is used may be known in advance at the time at which the electronic shelf labeling system is installed, the temperature sensor does not have to continuously sense the change in temperature, such that the operating mode may be set in advance or set while operating, depending on the temperature range corresponding to the use environment.

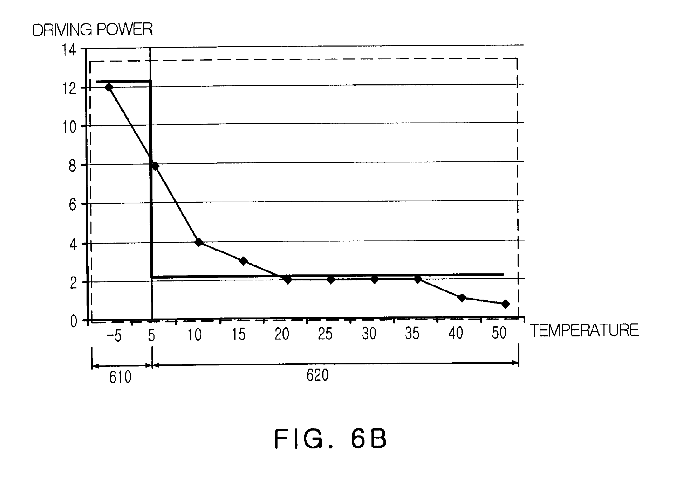

FIG. 6B is a diagram illustrating a manner in which a temperature range in a graph of FIG. 6A is divided into two. FIG. 6B is a graph illustrating respective temperature ranges when the operating mode of the electronic tag 100 is divided into a refrigerating mode 610 and a room temperature mode 620, as one embodiment of the present invention.

In more detail, the operating mode setting unit 110 may set the operating mode to the refrigerating mode 610 or the room temperature mode 620. That is, the switching unit 111 may perform the switching operation to set the operating mode to the refrigerating mode 610 or the room temperature mode 620. Alternatively, the communications unit 112 may receive the operating mode externally supplied. Herein, it is assumed that the operating mode is, for example, the refrigerating mode 610.

After the operating mode is set to be the refrigerating mode 610, the control unit 120 may receive the driving power information corresponding to the refrigerating mode 610. Referring to FIG. 4, since the control unit 120 includes the register 125, the control unit 120 may receive the driving power information corresponding to the refrigerating mode 610 from the register 125 within the control unit 120. In the case of referring to FIG. 5, as another embodiment of the present invention, since the display unit 130 includes the register 135, the control unit 130 may receive the driving power information corresponding to the refrigerating mode 610 from the register 135 within the display unit 130.

The control unit 120 being provided with the driving power information may control the driving power supplied to the display unit 130 depending on the driving power information corresponding to the refrigerating mode 610.

For example, when the operating mode is determined as the room temperature mode 620, referring to FIG. 6B, the display unit 120 of the electronic tag 100 requires the driving power depending on the room temperature mode 620. In this case, the control unit 120 may receive the driving power information corresponding to the room temperature mode 620, stored in one of the register 125 within the control unit 120 and the register 135 within the display unit 130. The driving power to be supplied to the display unit 130 may be controlled depending on the driving power information.

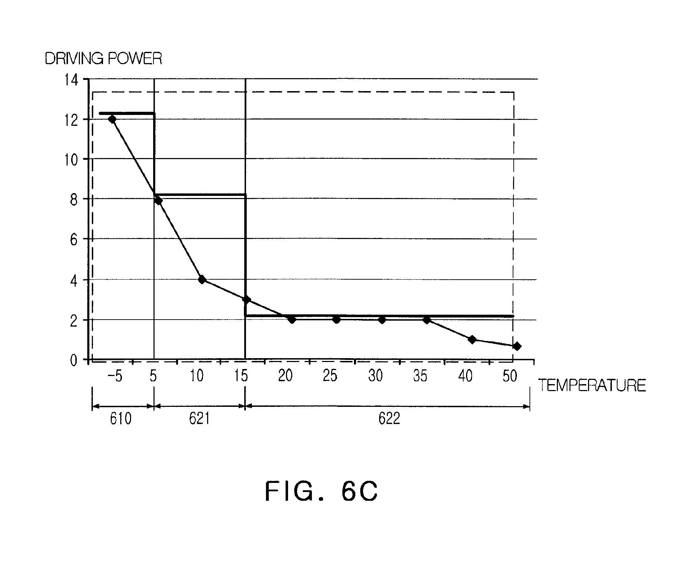

FIG. 6C is a diagram illustrating a manner in which a temperature range in the graph of FIG. 6A is divided into three.

That is, unlike FIG. 6B, FIG. 6C corresponds to the case in which the use environment is divided into three. In this case, the type of switch of the operating mode setting unit 110 may be determined in three selective types.

For example, the room temperature mode 620 may be divided into a first room temperature mode 621 and a second room temperature mode 622, and the control unit 120 may determine the driving power information corresponding to each condition to control the driving power supplied to the display unit 130.

FIG. 7 illustrates the display unit 130 of the electronic tag that displays product information 710 and an operating mode 720 according to the embodiment of the present invention.

That is, the display unit 130 may output product information to a customer as the product information 710 and may also display the operating mode 720 set by the operating mode setting unit 110. Therefore, the user may look the operating mode 720 displayed on the display unit 130 to more effectively manage the electronic tag 100.

In this case, the display of the product information 710 or the operating mode 720 may be visually transferred to a manager or a customer through a variety of representation ways, such as figures, symbols, special symbols, and the like, and thus, these representation ways are not limited to the embodiment described in FIG. 7.

By doing so, the electronic tag 100 may determine the operating mode of the electronic tag 100 by a simple switching operation, without the temperature sensor and may also receive the operating mode externally supplied. By doing so, the characteristics of the image quality displayed on the display unit 130 of the electronic tag 100 may be stably maintained.

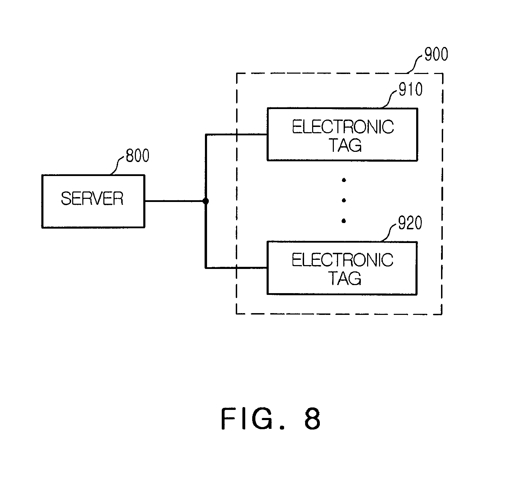

FIG. 8 is a block diagram of an electronic shelf labeling system according to an embodiment of the present invention.

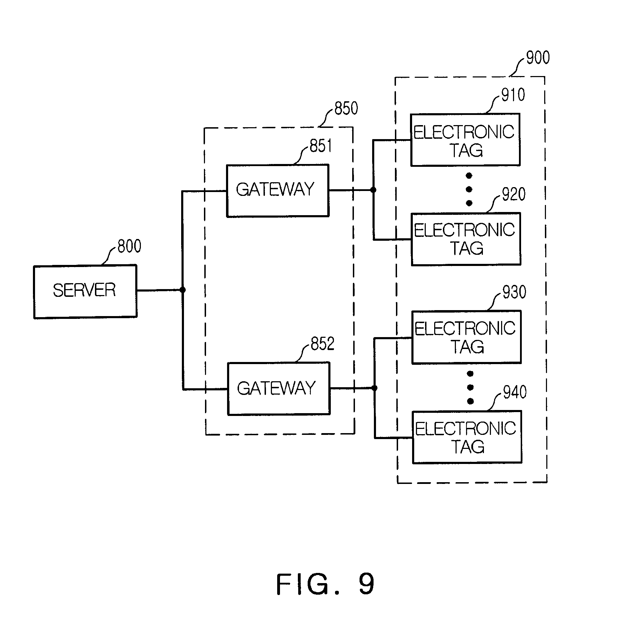

FIG. 9 is a block diagram of an electronic shelf labeling system according to another embodiment of the present invention.

Referring to FIG. 8, the electronic shelf labeling system may include a server 800 and a plurality of electronic tags 900.

Further, referring to FIG. 9, the electronic shelf labeling system may include the server 800, a plurality of gateways 850, and the plurality of electronic tags 900.

The server 500 may provide the operating mode having the at least two different temperature ranges externally supplied. In this case, the provided method may be at least one of wireless and wired communications.

Further, the electronic shelf labeling system may further include a user terminal that provides the operating mode having the at least two different temperature ranges externally supplied.

That is, the user terminal may set the operating mode and provide the set operating mode to the server 800, and the server 800 may provide the received operating mode to the plurality of electronic tags 900.

The plurality of electronic tags 900 may receive the operating mode to control the driving power depending on the driving power information corresponding to the operating mode. Alternatively, the plurality of electronic tags 900 may perform the switching operation to set the operating mode. After the setting of the operating mode, the plurality of electronic tags 900 may control the driving power and may display at least one of the driving power information and the product information on the screen.

In addition, the server 800 may form a network together with the plurality of gateways 850 and the plurality of electronic tags 900 may be connected to the plurality of gateways 850.

Referring to FIG. 9, the plurality of electronic tags 910 and 920 may be connected to the gateway 851, and the gateway 851 may also be connected to the server 800 to form a network.

In this case, the server 800 may directly provide the operating mode to the plurality of electronic tags 900, and may provide the operating mode to the plurality of gateways 850. For example, when the server 800 provides the operating mode to the plurality of gateways 850, the plurality of gateways 850 may provide the received operating mode to the plurality of electronic tags 900.

In this case, the operating mode may be provided to the communications units 112 of the plurality of electronic tags 900, and the plurality of electronic tags 900 may control the driving power depending on the driving power information corresponding to the operating mode.

Meanwhile, the plurality of electronic tags 900 may set the operating mode by the switching operation of the switching unit 111. Alternatively, the communications unit 112 may receive the operating mode from one of the server 800 and the plurality of gateways 850.

After the operating mode is set, the plurality of electronic tags 900 may include the registers 125 and 135 in which the driving power information corresponding to the operating mode is stored and may also include the control unit 120 controlling the driving power depending on the driving power information.

In addition, the plurality of electronic tags 900 may further include the power supply unit 140 that supplies the driving power depending on the control of the control unit 120 and may include the display unit 130 that displays at least one of the driving power information and the product information. In this case, respective components of the plurality of electronic tags 900 are the same as the afore-described components, and therefore, detailed descriptions thereof will be excluded.

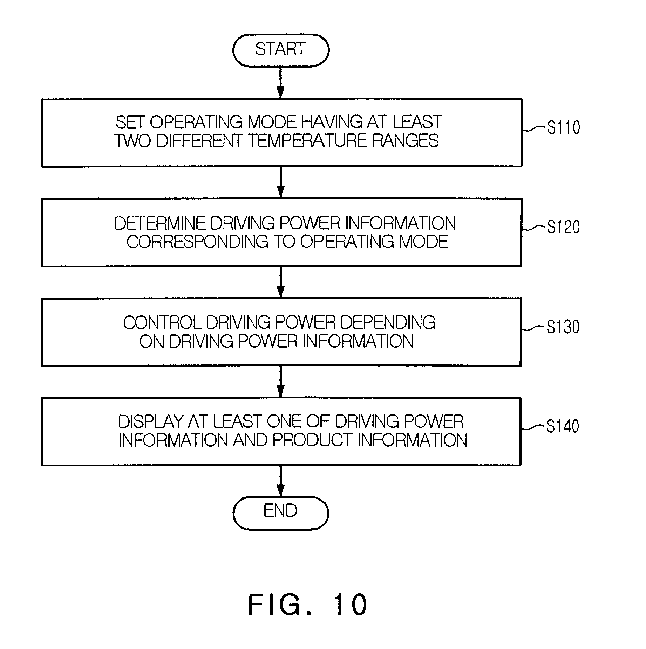

FIG. 10 is a flow chart of a method of controlling an electronic tag according to the embodiment of the present invention.

Referring to FIG. 10, a method of controlling an electronic tag may include setting the operating mode having two different temperature ranges (S110), determining the driving power information corresponding to the operating mode (S120), controlling the driving power depending on the driving power information (S130), and displaying at least one of the driving power information and the product information (S140).

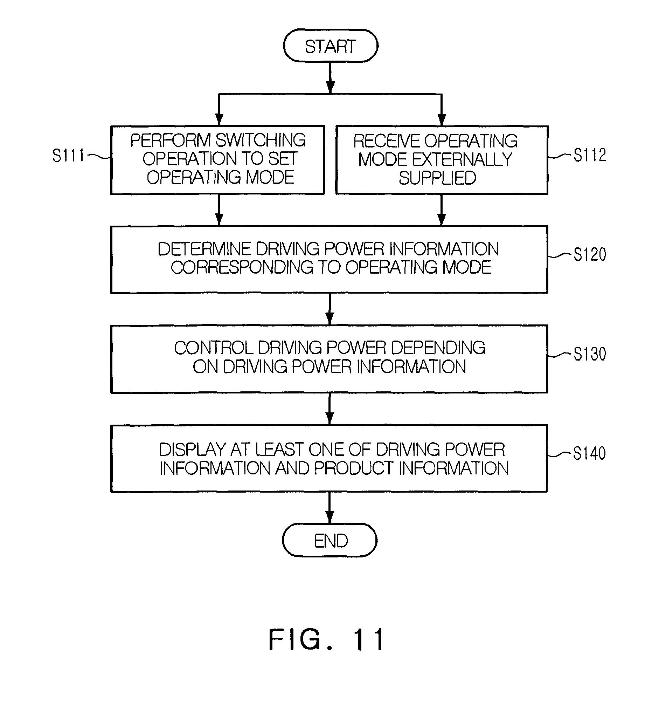

FIG. 11 is a flow chart of a method of controlling an electronic tag according to another embodiment of the present invention.

Referring to FIG. 11, the setting of the operating mode (S110) may be performing the switching operation to set the operating mode (S111) or may be that the operating mode externally supplied is provided (S112). Processes after being provided with the operating mode are the same as one described with reference to FIG. 10, and therefore the description thereof will be omitted.

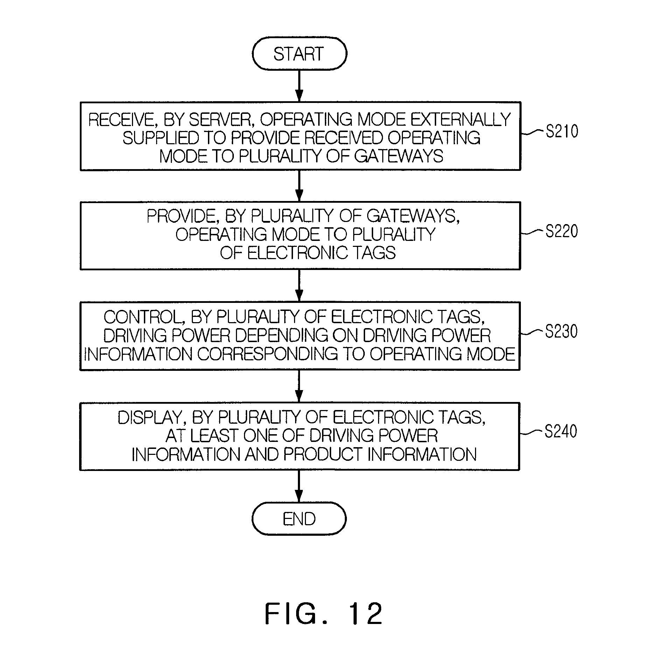

FIG. 12 is a flow chart of a method of controlling an electronic shelf labeling system according to an embodiment of the present invention.

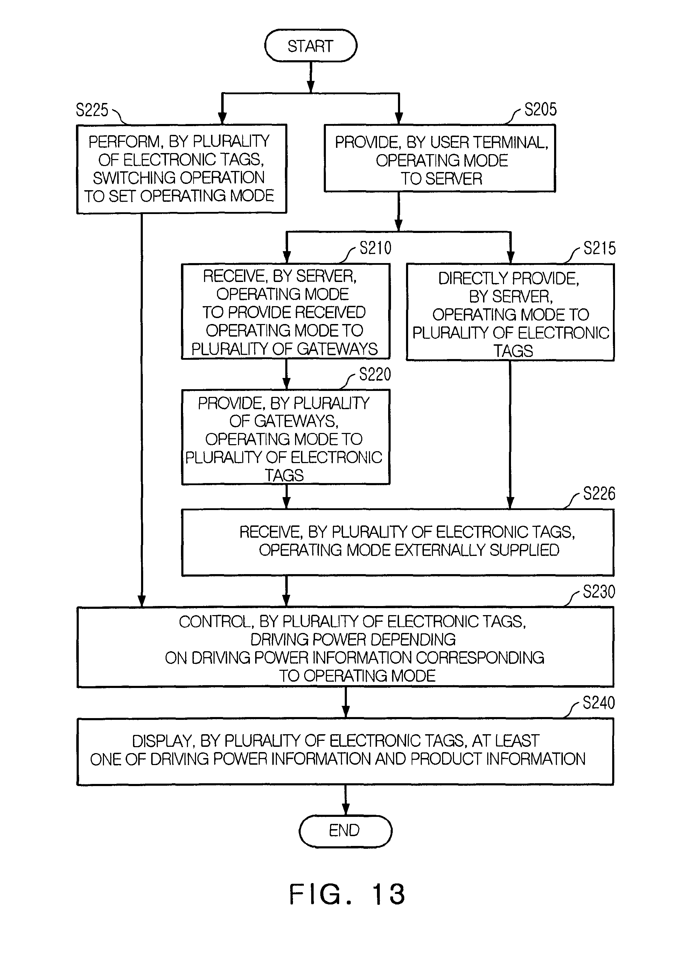

FIG. 13 is a flow chart of a method of controlling an electronic shelf labeling system according to another embodiment of the present invention.

Referring to FIG. 12, the method of controlling an electronic shelf labeling system may include allowing the operating mode having the at least two different temperature ranges externally supplied to be provided to the server to then provide the received operating mode to the plurality of gateways (S210), providing, by the plurality of gateways, the operating mode to the plurality of electronic tags (S220), controlling, by the plurality of electronic tags, the driving power depending on the driving power information corresponding to the operating mode (S230), and displaying, using the plurality of electronic tags, at least one of the driving power information and the product information (S240).

Referring to FIG. 13, the method of controlling an electronic shelf labeling system may include providing, by the user terminal, the operating mode to the server (S205). Further, the method of controlling an electronic shelf labeling system may further include providing, by the server, the operating mode having the at least two different temperature ranges to the plurality of electronic tags (S210).

That is, referring to FIGS. 12 and 13, the server may provide the operating mode provided from the user terminal to the plurality of electronic tags through the plurality of gateways (S210) or may directly provide the operating mode to the plurality of electronic tags (S215). In addition, the method of controlling an electronic shelf labeling system may include setting the operating mode by performing the switching operation without being provided with the operating mode externally supplied (S225).

Further, in the embodiment of the present invention, the temperature sensor may not be used, such that manufacturing costs may be saved, and the connection lines connecting the information acquired by the temperature sensor to the control unit and the input ports of the control unit may be saved.

As set forth above, according to the embodiments of the present invention, the current consumption consumed by the temperature sensor may be saved and the communication time and the driving power consumption consumed during the process of transferring the temperature value detected by the temperature sensor to the control unit may be saved. Further, the costs may be saved by not using the temperature sensor.

While the present invention has been shown and described in connection with the embodiments, it will be apparent to those skilled in the art that modifications and variations can be made without departing from the spirit and scope of the invention as defined by the appended claims.

## Claims

1. An electronic tag, comprising:
an operating mode setting unit setting an operating mode having at least two different temperature ranges;
a control unit determining driving power information corresponding to the operating mode and controlling driving power depending on the determined driving power information; and
a display unit displaying at least one of the driving power information and product information.

2. The electronic tag of claim 1, wherein the operating mode setting unit includes
a switching unit performing a switching operation to set the operating mode, and
a communications unit that receives the operating mode externally supplied.

3. The electronic tag of claim 1, wherein the control unit includes a register in which the driving power information corresponding to the operating mode is stored.

4. The electronic tag of claim 1, wherein the display unit includes a register in which the driving power information corresponding to the operating mode is stored.

5. The electronic tag of claim 1, further comprising a power supply unit supplying the driving power to the display unit depending on the control of the control unit.

6. An electronic shelf labeling system, comprising:
a server being provided with an operating mode having at least two different temperature ranges externally supplied; and
a plurality of electronic tags being provided with the operating mode from the server to control driving power depending on driving power information corresponding to the operating mode so as to display at least one of the driving power information and product information.

7. The electronic shelf labeling system of claim 6, further comprising a plurality of gateways being provided with the operating mode from the server and providing the received operating mode to the plurality of electronic tags.

8. The electronic shelf labeling system of claim 6, further comprising a user terminal providing the operating mode to the server.

9. The electronic shelf labeling system of claim 6, wherein the plurality of electronic tags include a communications unit being provided with the operating mode, a switching unit performing a switching operation to set the operating mode, a display unit displaying at least one of the driving power information and the product information, and a register in which the driving power information is stored.

10. The electronic shelf labeling system of claim 6, wherein the plurality of electronic tags further include a control unit controlling the driving power depending on the driving power information.

11. The electronic shelf labeling system of claim 10, wherein the plurality of electronic tags further include a power supply unit providing the driving power depending on the control of the control unit.

12. A method of controlling an electronic tag, comprising:
setting an operating mode having at least two different temperature ranges;
determining driving power information corresponding to the operating mode;
controlling driving power depending on the driving power information; and
displaying at least one of the driving power information and product information.

13. The method of claim 12, wherein the setting of the operating mode includes performing a switching operation to set the operating mode.

14. The method of claim 12, wherein the setting of the operating mode includes being provided with the operating mode externally supplied.

15. A method of controlling an electronic shelf labeling system, comprising:
allowing an operating mode having at least two different temperature ranges externally supplied to be provided to a server to then provide the received operating mode to a plurality of gateways;
providing, by the plurality of gateways, the operating mode to the plurality of electronic tags;
controlling, by the plurality of electronic tags, to control driving power depending on driving power information corresponding to the operating mode; and
displaying, using the plurality of electronic tags, at least one of the driving power information and product information.

16. The method of claim 15, further comprising providing, by a user terminal, the operating mode to the server.

17. The method of claim 15, further comprising directly providing, by the server, the operating mode to the plurality of electronic tags.

18. The method of claim 15 further comprising performing, by the plurality of electronic tags, a switching operation to set the operating mode.

## Amended claims

### Amended claims in accordance with Rule 137(2) EPC.

**1.** An electronic tag, comprising:
an operating mode setting unit setting an operating mode having at least two different temperature ranges;
a control unit determining driving power information corresponding to the operating mode and controlling driving power depending on the determined driving power information; and
a display unit displaying the driving power information corresponding to the operating mode; and displaying product information.

**2.** The electronic tag of claim 1, wherein the operating mode setting unit includes
a switching unit performing a switching operation to set the operating mode, and
a communications unit that receives the operating mode externally supplied.

**3.** The electronic tag of claim 1, wherein the control unit includes a register in which the driving power information corresponding to the operating mode is stored.

**4.** The electronic tag of claim 1, wherein the display unit includes a register in which the driving power information corresponding to the operating mode is stored.

**5.** The electronic tag of claim 1, further comprising a power supply unit supplying the driving power to the display unit depending on the control of the control unit.

**6.** An electronic shelf labeling system, comprising:
a server being provided with an operating mode having at least two different temperature ranges externally supplied; and
a plurality of electronic tags being provided with the operating mode from the server to control driving power depending on driving power information corresponding to the operating mode so as to display the driving power information corresponding to the operating mode; and to display product information.

**7.** The electronic shelf labeling system of claim 6, further comprising a plurality of gateways being provided with the operating mode from the server and providing the received operating mode to the plurality of electronic tags.

**8.** The electronic shelf labeling system of claim 6, further comprising a user terminal providing the operating mode to the server.

**9.** The electronic shelf labeling system of claim 6, wherein the plurality of electronic tags include a communications unit being provided with the operating mode, a switching unit performing a switching operation to set the operating mode, a display unit displaying at least one of the driving power information and the product information, and a register in which the driving power information is stored.

**10.** The electronic shelf labeling system of claim 6, wherein the plurality of electronic tags further include a control unit controlling the driving power depending on the driving power information.

**11.** The electronic shelf labeling system of claim 10, wherein the plurality of electronic tags further include a power supply unit providing the driving power depending on the control of the control unit.

**12.** A method of controlling an electronic tag, comprising:
setting an operating mode having at least two different temperature ranges;
determining driving power information corresponding to the operating mode;
controlling driving power depending on the driving power information; and
displaying the driving power information corresponding to the operating mode; and displaying product information.

**13.** The method of claim 12, wherein the setting of the operating mode includes performing a switching operation to set the operating mode.

**14.** The method of claim 12, wherein the setting of the operating mode includes being provided with the operating mode externally supplied.

**15.** A method of controlling an electronic shelf labeling system, comprising:
allowing an operating mode having at least two different temperature ranges externally supplied to be provided to a server to then provide the received operating mode to a plurality of gateways;
providing, by the plurality of gateways, the operating mode to the plurality of electronic tags;
controlling, by the plurality of electronic tags driving power depending on driving power information corresponding to the operating mode; and
displaying, using the plurality of electronic tags, the driving power information corresponding to the operating mode; and displaying, using the plurality of electronic tags, product information.

**16.** The method of claim 15, further comprising providing, by a user terminal, the operating mode to the server.

**17.** The method of claim 15, further comprising directly providing, by the server, the operating mode to the plurality of electronic tags.

**18.** The method of claim 15 further comprising performing, by the plurality of electronic tags, a switching operation to set the operating mode.
